# DEMANDE DE BREVET EUROPEEN

(11) **EP 2 008 887 A1**
(43) Date de publication de la demande: **31.12.2008**
(21) Numéro de dépôt: 08305288.6
(22) Date de dépôt: 19.06.2008
(51) Int. Cl.: B60S 1/20

(54) **Mécanisme pour déphaser les mouvements des balais d'un essuie glace de véhicule automobile**

(30) Priorité: 29.06.2007 FR 0756159
(71) Demandeur: Peugeot Citroën Automobiles SA, 78140 Vélizy-Villacoublay (FR)
(72) Inventeur: Jeuffe, Gérard Michel, 78580, Bazemont (FR); Kuttler, Romain, 70400, Bussurel (FR)

(57) **Abrégé**

Mécanisme pour créer un déphasage entre les mouvements des deux balais (2,3) d'un essuie glace de véhicule automobile, le déplacement de ces balais étant assuré à partir d'un moteur d'entraînement unique agissant sur deux câbles (11) opposés, caractérisé en ce qu'il comporte une bielle de commande (15), fixée sur l'axe (14) de l'arbre de sortie du moteur d'entraînement, cette bielle portant un pion (17) excentré, engagé dans une gorge transversale (23) d'un coulisseau plat (22), formant came, guidé dans des glissières longitudinales et parallèles (18,19) d'un boîtier de support (13), de telle sorte que la rotation de la bielle (15) avec l'axe provoque le déplacement de ce coulisseau plat (22) dans les glissières (18,19), ce coulisseau comportant sur l'une et l'autre de ses faces opposées (24,25) deux rainures profilées (26), dans chacune desquelles s'engage un ergot d'actionnement (31) solidaire d'un manchon (29) lié à un des deux câbles (11), les profils de ces deux rainures étant différents de l'une à l'autre et agencé de manière que le mouvement de déplacement d'un câble par rapport aux glissières soit déphasé dans le temps par rapport au mouvement de l'autre câble.

## Description

La présente invention est relative à un mécanisme permettant d'assurer un déphasage relatif dans le mouvement des balais d'un essuie glace pour véhicule automobile lors de leurs débattements selon un mouvement alterné et coordonné contre la surface d'une paroi vitrée, notamment le pare brise avant de ce véhicule.

Les balais d'essuie glace les plus classiques comportent généralement un support pour un bras oscillant, portant à son tour, directement ou par l'intermédiaire d'un ensemble à ressorts qui l'appuie sur la surface de la paroi vitrée, une raclette souple qui enlève l'eau et les salissures déposées sur cette dernière.

Ce support du bras oscillant est solidaire d'un axe d'entraînement animé d'un mouvement de rotation alternatif dans un sens puis dans l'autre, au moyen d'au moins un moteur de commande dont l'arbre de sortie est confondu ou solidarisé avec cet axe.

En règle générale, en particulier dans le cas du pare brise avant du véhicule, la surface vitrée coopère avec deux balais dont les déplacements sont coordonnés afin d'empêcher leur rencontre au cours de leurs mouvements propres, risquant de les bloquer mutuellement, ces déplacements étant réalisés en créant un déphasage convenable dans le trajet des raclettes souples qu'ils supportent.

Ce déphasage peut être obtenu, soit par une timonerie mécanique reliant les deux bras, de sorte que leurs déplacements soient assurés à partir d'un moteur unique entraînant l'axe de rotation d'un de ces balais, soit au moyen de deux moteurs distincts pilotant chacun un balai avec un décalage dans le temps approprié.

Dans le premier cas, la solution est encombrante et conduit en particulier à occuper, avec la timonerie reliée aux deux bras afin de les entraîner selon une séquence appropriée, une large partie de l'espace disponible en avant de ces balais, au droit du bord du capot qui ferme le compartiment contenant le moteur du véhicule.

Dans l'autre, la solution à deux moteurs est coûteuse, chaque moteur occupant en outre un espace qui n'est pas non plus négligeable.

La présente invention est relative à un mécanisme qui permet d'assurer le déphasage nécessaire entre les mouvements des deux balais de l'essuie glace en contact avec la surface vitrée du pare brise avant du véhicule, le déplacement de ces balais étant assuré à partir d'un moteur d'entraînement unique agissant sur deux câbles opposés, intervenant respectivement sur l'un et l'autre de ces balais.

A cet effet, le mécanisme considéré se caractérise en ce qu'il comporte une bielle de commande, fixée sur l'axe de l'arbre de sortie du moteur d'entraînement, cette bielle portant un pion excentré par rapport à l'axe, engagé dans une gorge transversale d'un coulisseau plat, formant came, guidé dans des glissières longitudinales et parallèles d'un boîtier de support, s'étendant perpendiculairement à la fois à l'axe de l'arbre du moteur et à la direction de la gorge du coulisseau de telle sorte que la rotation de la bielle avec l'axe provoque le déplacement de ce coulisseau plat dans les glissières du boîtier, ce coulisseau comportant sur l'une et l'autre de ses faces opposées deux rainures profilées, dans chacune desquelles s'engage un ergot d'actionnement solidaire d'un manchon lié à un des deux câbles commandant chacun un des balais de l'essuie glace, les profils de ces deux rainures étant différents de l'une à l'autre et agencés de manière que le mouvement de déplacement transversal d'un câble par rapport aux glissières du boîtier soit déphasé dans le temps par rapport au mouvement de déplacement l'autre câble.

Selon une autre caractéristique, les deux rainures ménagées dans les faces opposées du coulisseau plat, ont des zones d'extrémité parallèles aux glissières du boîtier de manière à annuler les mouvements de déplacement transversal des deux câbles lorsque les ergots des manchons liés à ces câbles se déplacent dans ces zones.

Selon une caractéristique complémentaire également, chacun des manchons liés aux deux câbles comporte une nervure en relief engagée dans une entaille du boîtier de support, de manière à guider le câble dans son mouvement de déplacement transversal.

Avantageusement, les entailles recevant les nervures de chacun des manchons liés aux deux câbles sont parallèles entres elles et ménagées dans les faces opposées du boîtier de support.

Selon encore une autre caractéristique, chaque ergot d'actionnement supporte au moins un galet de roulement pour son guidage dans sa rainure du coulisseau.

De préférence, chaque câble commandant un des balais d'essuie glace comporte, à l'opposé du boîtier de support, une crémaillère droite dont les dents engrènent avec un pignon tourillonnant dans un palier fixe et dont l'axe supporte le balai de l'essuie glace entraîné par ce câble.

En variante, chaque câble a son extrémité sertie sur un doigt porté par une roue sur laquelle s'enroule ce câble, le balai d'essuie glace étant solidarisé de l'axe de la roue.

D'autres caractéristiques d'un mécanisme de commande du déphasage entre les mouvements des deux balais d'un essuie glace de véhicule automobile apparaîtront encore à travers la description qui suit d'exemples de réalisation, donnés à titre indicatif et non limitatif, en référence aux dessins annexés sur lesquels :
- La Figure 1 est une vue schématique illustrant l'ensemble formé par les deux balais d'essuie glace d'un véhicule automobile, équipé d'un mécanisme conforme à l'invention.
- La Figure 2 est une vue en perspective éclatée, à plus grande échelle, du mécanisme considéré, provoquant un déphasage dans les déplacements des deux câbles d'entraînement des balais.
- Les Figures 3a, 3b et 3c illustrent la mise en oeuvre des moyens permettant le mouvement alternatif du coulisseau assurant les déplacements déphasés des câbles d'entraînement.
- La Figure 4 est un diagramme représentatif du déphasage créé entre les mouvements des deux balais de l'essuie glace.
- la Figure 5 illustre un premier mode de réalisation d'un organe de pivotement, transmettant le mouvement de chacun des câbles d'entraînement au balai qui lui est associé.
- La Figure 6 illustre une variante de réalisation de l'organe de pivotement.
- Les Figures 7, 8 et 9 sont des vues schématiques des deux balais représentés dans diverses positions de l'un et de l'autre, occupées successivement au cours de leurs mouvements relatifs commandés par le mécanisme de déphasage selon l'invention.

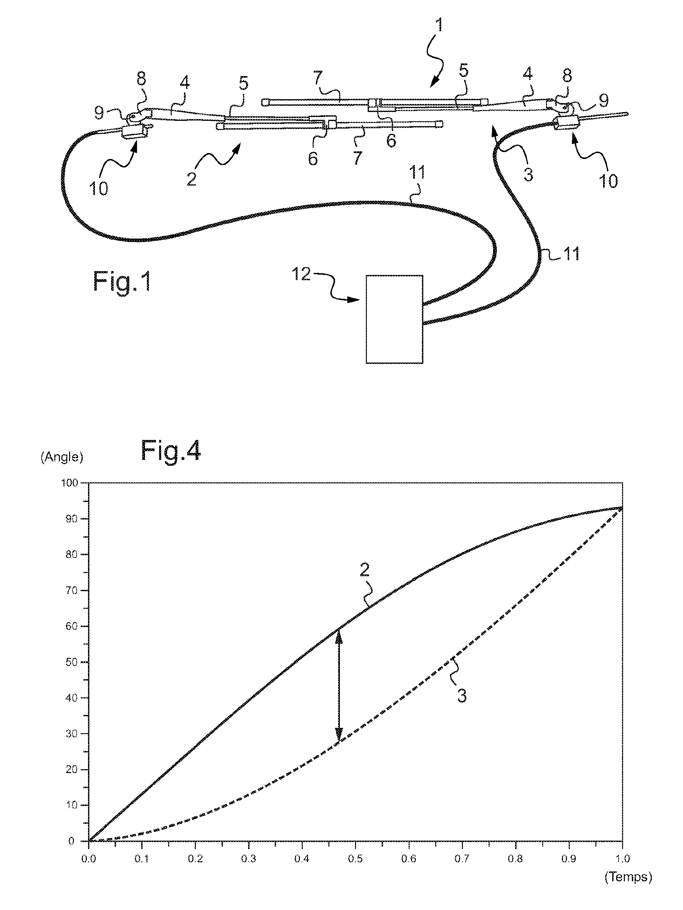

Sur la Figure 1, la référence 1 désigne un ensemble d'essuie glace pour le balayage d'une surface vitrée d'un véhicule automobile, notamment de son pare brise avant (non représenté), constitué au moyen de deux balais identiques, respectivement 2 et 3, agencés pour se déplacer vis-à-vis de cette surface avec des mouvements en va et vient alternés.

Chacun des balais 2 et 3 comporte, de façon en elle-même bien connue dans la technique, un bras 4 prolongé par une tige 5, munie d'un moyen d'appui 6 contre la surface vitrée à balayer d'une raclette souple 7, le détail de la réalisation de ces balais n'important pas directement à l'invention.

Notamment, selon deux variantes les plus usuellement mises en oeuvre, les moyens d'appui 6 de la raclette 7 sur la surface peuvent être constitués d'un ensemble à ressorts qui exerce sur cette raclette une pression d'appui appropriée, ou bien découler de la structure même de la raclette qui comporte dans ce cas une lèvre souple, solidaire d'une armature flexible assurant l'effort d'application nécessaire.

Le bras 4 de chacun des balais est articulé sur un support 8 afin de permettre de le faire pivoter par rapport à celui-ci en l'écartant de la surface vitrée, en particulier pour entretien ou remplacement de la raclette souple 7.

Chacun des supports 8 des deux balais 2 et 3 est lui-même articulé autour d'un axe 9, permettant d'agir sur le balai correspondant pour lui imposer un mouvement de rotation alterné sous l'effet d'un organe de pivotement 10.

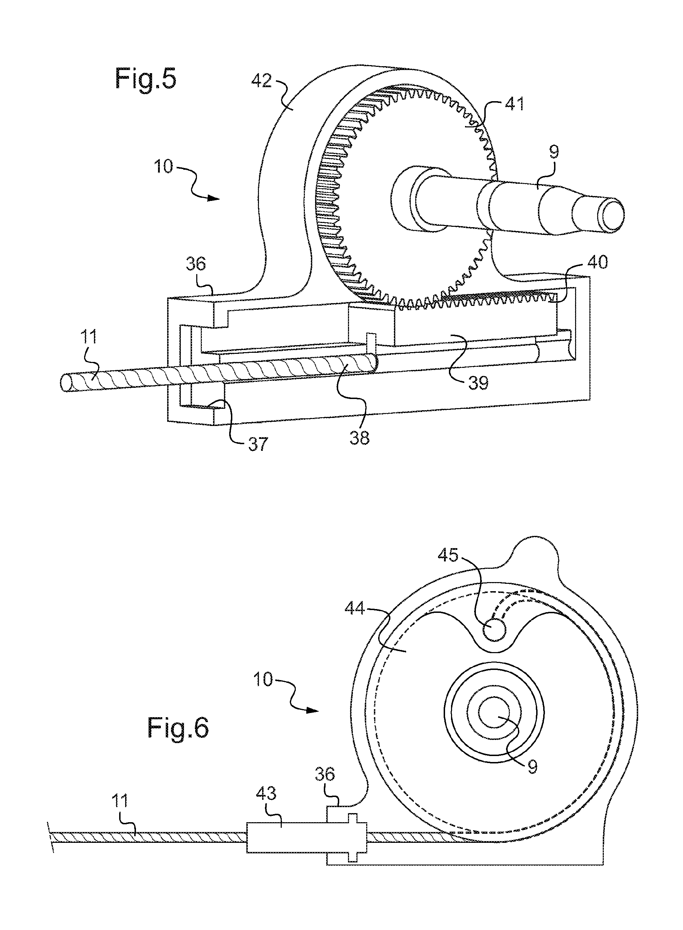

Chacun de ces organes de pivotement 10 (dont le détail de la réalisation sera explicité plus loin en référence aux Figures 5 et 6) est actionné à l'aide d'un câble souple 11, ces deux câbles étant réunis ensemble à un mécanisme commun 12 permettant, conformément à l'invention, de décaler convenablement dans le temps les mouvements de ces câbles qui réalisent respectivement, par l'intermédiaire de l'organe de pivotement 10 qui leur est associé, les déplacements simultanés en rotation alternée des balais 2 et 3 avec un déphasage approprié, de telle sorte que, au cours du balayage de la surface du pare brise qu'ils assurent, tout risque de collision entre eux soit évité.

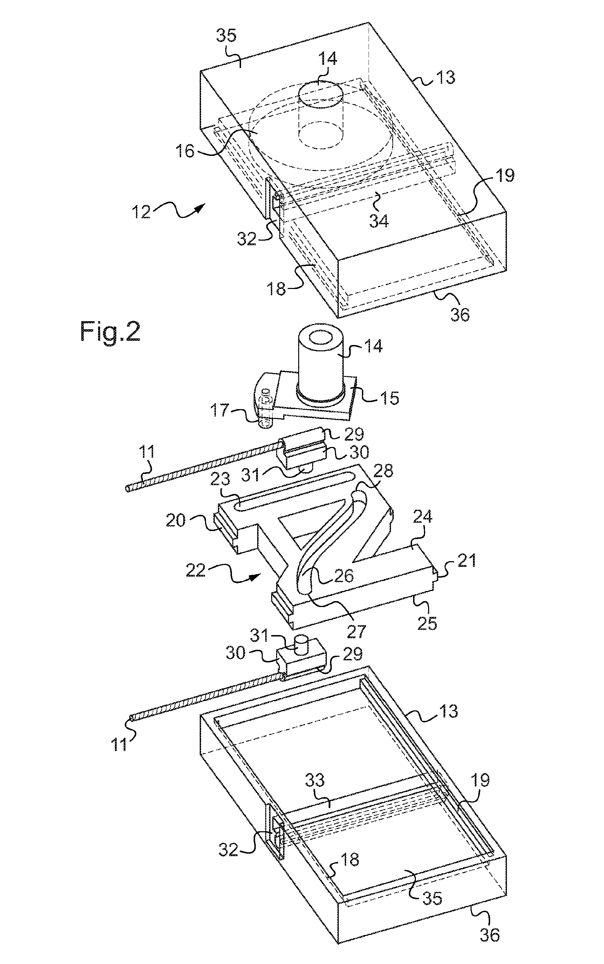

La Figure 2 illustre, à plus grande échelle, en perspective et en vue éclatée, la structure du mécanisme 12 qui, conformément à l'invention, crée le décalage dans le temps des mouvements successivement de traction et de poussée imposés aux deux câbles 11 pour assurer, par l'intermédiaire de l'organe de pivotement 10 qui leur est respectivement associé, la commande en rotation alternée et convenablement déphasée des deux balais 2 et 3 de l'essuie glace.

Comme on le voit sur cette figure, ce mécanisme 12 comporte un boîtier de support 13 dans lequel aboutit un axe d'entraînement 14 qui peut être directement celui de l'arbre de sortie d'un moteur d'entraînement (non représenté).

Sur l'axe 14 est fixée une bielle de commande 15, entraînée en rotation circulaire autour de l'axe, schématisé sur la Figure 2 en traits pointillés sous la référence 16, cette bielle 15 supportant en bout un pion 17, ainsi excentré vis-à-vis de l'axe.

Le boîtier 13, dont la forme générale est de préférence celle d'un parallélépipède allongé, comporte dans ses côtés latéraux deux glissières parallèles, respectivement 18 et 19, recevant des nervures 20 et 21 prévues sur les bords en regard d'un coulisseau plat 22, également de forme parallélépipédique, logé dans le boîtier et susceptible ainsi de se déplacer alternativement selon la direction longitudinale de ces glissières, successivement dans un sens ou dans l'autre selon le mouvement qui lui est imposé par la coopération du pion 17 de la bielle de commande 15 à l'intérieur d'une gorge transversale 23, ménagée dans ce coulisseau à proximité d'un de ses bords s'étendant perpendiculairement aux glissières du boîtier, cette gorge étant ainsi elle-même perpendiculaire à la direction de l'axe d'entraînement 14.

On comprend ainsi aisément que la mise en rotation de la bielle 15 par l'axe 14, sous l'effet du moteur de commande, provoque simultanément celui du pion 17, lequel du fait de son engagement dans la gorge 23 dans laquelle il est maintenu prisonnier, impose au coulisseau plat 22 un déplacement transversal alternatif selon la direction longitudinale de cette gorge et, par suite, crée un mouvement d'oscillation dans un sens et dans l'autre de ce coulisseau formant came, à l'intérieur du boîtier de support 13.

Conformément à l'invention, chacune des faces opposées 24 et 25 du coulisseau plat 22 comporte une rainure profilée 26, s'étendant d'un bord à l'autre du coulisseau entre les glissières parallèles 18 et 19 du boîtier 13, chacune de ces rainures 26 ayant sensiblement un profil en S allongé, s'étendant d'un côté latéral à l'autre de ce coulisseau.

Les deux rainures 26, dont une seule est représentée sur la vue en perspective de la Figure 2, prévues respectivement dans l'une et l'autre des deux faces 24 et 25 du coulisseau plat 22, ont des profils similaires mais qui néanmoins présentent des variations de l'une à l'autre, en particulier dans la valeur de leur courbure au fur et à mesure que l'on se déplace d'une extrémité 27 à l'autre 28 de chacune d'elles.

En revanche, dans les zones de ces extrémités 27 et 28, les deux rainures 26 sont identiques et s'étendent parallèlement l'une à l'autre.

Comme on le voit également sur la Figure 2, chacun des deux câbles 11 associés aux balais 2 et 3 de l'essuie glace 1, comporte un manchon 29 dans lequel s'engage et se fixe l'extrémité du câble.

Chacun des manchons 29 comporte par ailleurs une nervure en relief 30, elle-même solidarisée d'un ergot d'actionnement 31, ainsi lié au câble correspondant, cet ergot étant agencé pour s'engager dans une des rainures 26 du coulisseau plat 22, d'un côté et de l'autre de celui-ci à l'intérieur du boîtier de support 13.

Avantageusement, chaque ergot 31 est muni d'un galet de roulement (non représenté pour ne pas surcharger le dessin), facilitant son guidage et son déplacement dans la rainure 26 dans laquelle il est engagé.

Les deux câbles 11 traversent librement la paroi latérale du boîtier par une ouverture 32 de celui-ci. Les nervures 30 des manchons 29 prévus aux extrémités de ces câbles sont en outre guidées dans des entailles, respectivement 33 et 34, ménagées dans les faces opposées 35 et 36 du boîtier 13, en regard de cette ouverture 32.

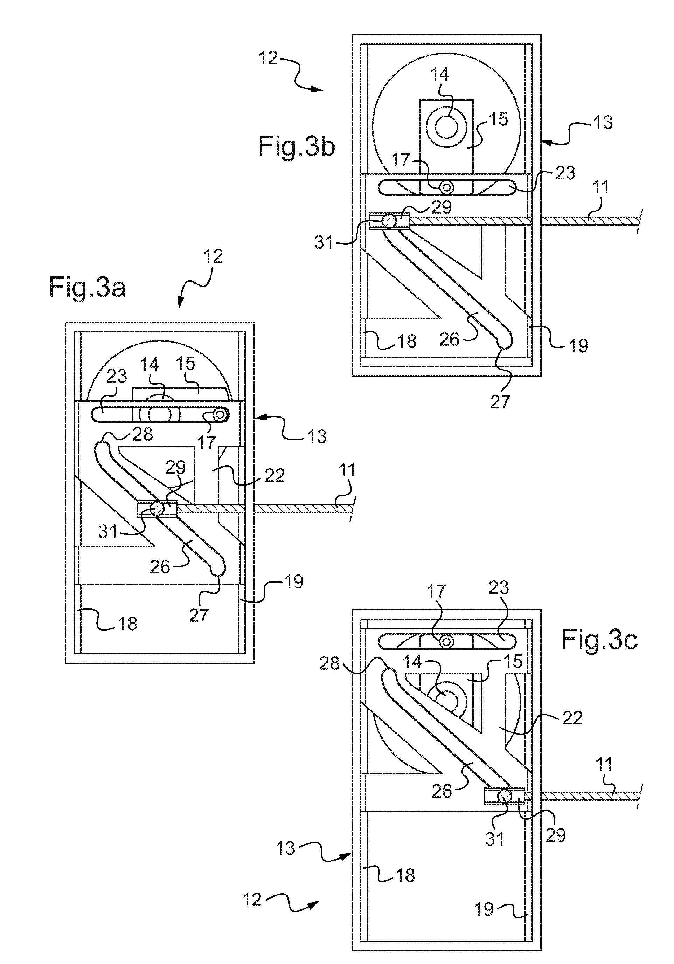

Grâce à ces dispositions, on constate que les deux câbles 11, par suite du déplacement relatif des ergots 31 des manchons 29 dans les rainures 26, consécutivement au mouvement alternatif du coulisseau plat 22 dans les glissières parallèles 18 et 19 du boîtier 13 d'une part, du fait du guidage de ces manchons par le coulissement des nervures 30 dans les entailles 33 et 34 des faces opposées 35 et 36 de ce boîtier, subissent un mouvement alterné d'oscillation, parallèlement à eux-mêmes, au fur et à mesure que ces ergots 31 décrivent ces rainures 26 d'une extrémité à l'autre de chacune d'elles, dans un sens puis dans l'autre, comme l'illustrent les Figures 3a, 3b et 3c.

Sur ces figures, le coulisseau plat 22 est représenté dans trois positions successives, selon qu'il est amené à l'intérieur du boîtier de support 13 dans la partie médiane de celui-ci (Figure 3a), ou dans l'une ou l'autre de ses extrémités opposées (Figure 3b et 3c respectivement).

Ces positions correspondent à trois orientations distinctes de la bielle de commande 15 entraînée en rotation continue autour de l'axe 14, où cette bielle est respectivement parallèle à la direction des côtés latéraux du boîtier 13 mais en situation inverse pour les deux positions extrêmes (Figures 3b et 3c) qu'elle occupe, et perpendiculaire à cette direction pour la position intermédiaire (Figure 3a).

Du fait de cette rotation de la bielle 15, le pion 17 qui en est solidaire se déplace alternativement vers la droite puis vers la gauche dans la gorge transversale 23, en entraînant le coulisseau plat 22 dans les glissières parallèles 18 et 19 du boîtier 13, d'une extrémité à l'autre de celles-ci et vice versa.

Les deux rainures 26 prévues dans les faces opposées du coulisseau 22 se déplacent en conséquence d'une façon relative vis-à-vis des ergots 31 et des câbles 11 qui sont liés à ces ergots par les manchons 29.

Les deux câbles 11 sont en conséquence de ce déplacement relatif du coulisseau 22, animés d'un mouvement de va et vient selon leur direction longitudinale, alternativement vers la droite puis vers la gauche, les mouvements correspondant des câbles exerçant un effort de poussée puis de traction transmis par chacun d'eux aux organes de transmission 10 qui leur sont associés et par suite aux deux balais d'essuie glace 2 et 3, en contact avec la surface vitrée.

Grâce au profil particulier mais différent de l'une à l'autre des deux rainures 26 prévues sur les faces opposées du coulisseau plat 22, les déplacements imposés par les ergots 31 aux manchons 29 solidaires des extrémités des deux câbles 11, guidés par leurs nervures 30 dans les entailles 34 et 35 du boîtier, sont alors convenablement déphasés de telle sorte que les mouvements des balais 2 et 3 soient eux-mêmes décalés dans le temps au cours de leurs trajets respectifs.

Le diagramme de la Figure 4, qui porte le temps en abscisses et l'angle des balais dans leurs déplacements respectifs en ordonnées, illustre ce déphasage, ces balais partant d'une position d'origine commune pour aboutir en fin de course à une position finale également commune grâce à l'identité des zones terminales des deux rainures 26 dont les extrémités 27 et 28 sont notamment parallèles entre elles et aux glissières latérales 18 et 19 du boîtier 13, annulant ainsi les mouvements de déplacement transversal de ces câbles lorsque leurs ergots 31 décrivent ces zones.

Les Figures 5 et 6 illustrent deux variantes de réalisation de l'organe de pivotement 10 sur lequel les câbles 11, dont les mouvements sont ainsi convenablement décalés dans le temps, agissent successivement, en poussée et en traction, pour provoquer l'oscillation des balais 2 et 3 contre la surface vitrée.

Sur la Figure 5, l'organe de pivotement 10 comporte un support 36 présentant un logement interne 37, à l'intérieur duquel pénètre l'extrémité terminale 38 du câble 11.

A cette extrémité 38, le câble est solidarisé d'une crémaillère droite 39 dont les dents 40 engrènent avec un pignon cranté 41, tourillonnant dans un palier 42 faisant partie du support 36, l'axe de ce pignon 41 coïncidant avec l'axe de rotation 9 du balai 2 ou 3 correspondant.

Grâce aux déplacements déphasés des deux câbles 11 à partir du mécanisme 12 réalisés de la manière décrite précédemment, successivement en poussée puis en traction, l'entraînement en rotation alternative de chacun des deux balais 2 et 3 s'effectue, par suite de la coopération des dents 40 de la crémaillère 39 avec le pignon cranté 41, avec un décalage approprié, résultant du déphasage dans le temps créé par les profils différents des deux rainures 26 du coulisseau plat 22, agissant sur l'un et l'autre de ces câbles séparément.

La Figure 6 illustre une variante de réalisation, dans laquelle la partie terminale du câble 11, qui pénètre dans le support 36 à travers un embout 43 surmoulé sur la gaine de ce câble, s'enroule sur une roue 44 fixée sur l'axe de rotation 9 du balai 2 ou 3 correspondant, l'extrémité du câble étant sertie sur un doigt 45 porté par cette roue sur laquelle s'enroule ou se déroule le câble selon ses déplacements, ces derniers étant comme dans l'exemple précédent convenablement décalés dans le temps, d'un balai au suivant.

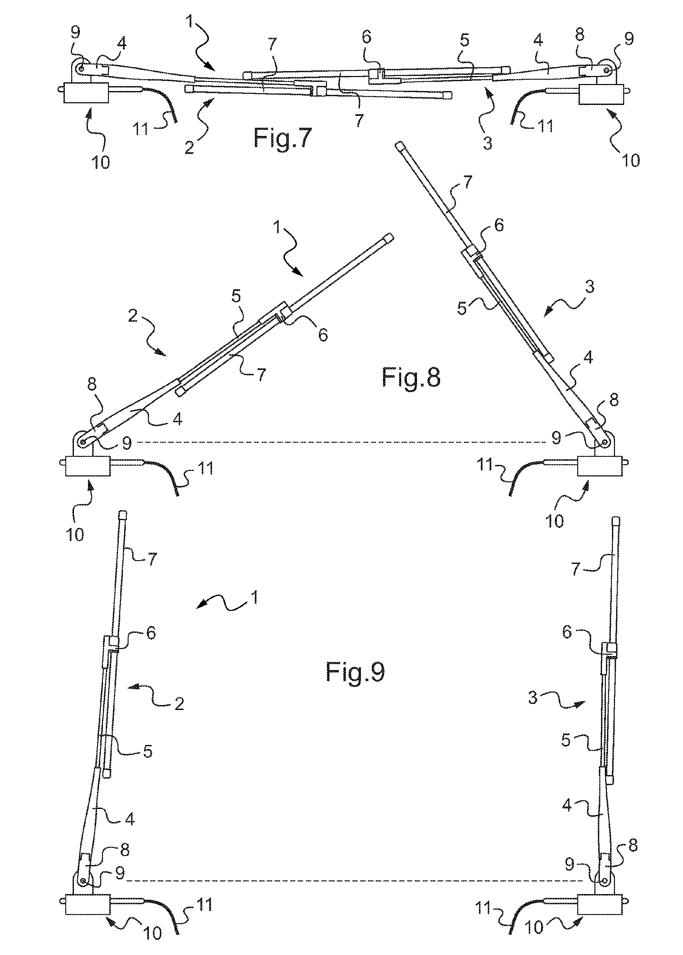

Les Figures 7, 8 et 9 montrent la manière dont s'effectue la mise en oeuvre du mécanisme de déphasage selon l'invention et le décalage qui en résulte pour les mouvements des deux câbles d'entraînement, se traduisant, par l'intermédiaire des organes de pivotement associés, sur les déplacements alternés des deux balais.

Sur ces figures, les deux balais 2 et 3 sont représentés dans leur position initiale contre la surface vitrée (Figure 7), où les deux balais sont quasi en contact l'un avec l'autre, dans une position intermédiaire (Figure 8) où les déplacements mutuels à un instant donné de chacun de ces balais sont convenablement déphasés pour éviter leur collision, avant que, en fin de balayage, ces deux balais n'occupent à nouveau des positions sensiblement symétriques et opposées (Figure 9).

On réalise ainsi un mécanisme de déphasage de conception très simple, qui permet, à partir d'un moteur unique et de deux câbles souples, d'actionner les deux balais d'un essuie glace avec un décalage dans le temps approprié au cours de leurs déplacements entre une position initiale et une position finale symétriques, ce déphasage étant réalisé de façon automatique et contrôlée.

Bien entendu, il va de soi que l'invention ne se limite pas aux exemples de réalisation plus spécialement décrits et représentés en référence aux dessins annexés ; elle en embrasse au contraire toutes les variantes.

## Revendications

1. Mécanisme pour créer un déphasage entre les mouvements des deux balais (2,3) d'un essuie glace de véhicule automobile, en contact avec la surface vitrée du pare brise avant de ce véhicule, le déplacement de ces balais étant assuré à partir d'un moteur d'entraînement unique agissant sur deux câbles (11) opposés, intervenant respectivement sur l'un et l'autre de ces balais, **caractérisé en ce qu'**il comporte une bielle de commande (15), fixée sur l'axe (14) de l'arbre de sortie du moteur d'entraînement, cette bielle portant un pion (17) excentré par rapport à l'axe, engagé dans une gorge transversale (23) d'un coulisseau plat (22), formant came, guidé dans des glissières longitudinales et parallèles (18,19) d'un boîtier de support (13), s'étendant perpendiculairement à la fois à l'axe (14) de l'arbre du moteur et à la direction de la gorge (23) du coulisseau de telle sorte que la rotation de la bielle (15) avec l'axe provoque le déplacement de ce coulisseau plat (22) dans les glissières (18,19) du boîtier, ce coulisseau comportant sur l'une et l'autre de ses faces opposées (24,25) deux rainures profilées (26), dans chacune desquelles s'engage un ergot d'actionnement (31) solidaire d'un manchon (29) lié à un des deux câbles (11) commandant chacun un des balais (2,3) de l'essuie glace, les profils de ces deux rainures du boîtier étant différents de l'une à l'autre et agencés de manière que le mouvement de déplacement transversal d'un câble par rapport aux glissières soit déphasé dans le temps par rapport au mouvement de déplacement l'autre câble.

2. Mécanisme selon la revendication 1, **caractérisé en ce que** les deux rainures (26) ménagées dans les faces opposées (24,25) du coulisseau plat (22), ont des zones d'extrémité (27,28) parallèles aux glissières (18,19) du boîtier de manière à annuler les mouvements de déplacement transversal des deux câbles (11) lorsque les ergots (31) des manchons (29) liés à ces câbles se déplacent dans ces zones.

3. Mécanisme selon l'une des revendications 1 ou 2, **caractérisé en ce que** chacun des manchons (29) liés aux deux câbles (11) comporte une nervure en relief (30) engagée dans une entaille (33,34) du boîtier de support (13), de manière à guider le câble dans son mouvement de déplacement transversal.

4. Mécanisme selon la revendication 3, **caractérisé en ce que** les entailles (33,34) recevant les nervures (30) des manchons (29) liés aux deux câbles (11) sont parallèles et ménagées dans les faces opposées (35,36) du boîtier de support (13).

5. Mécanisme selon l'une des revendications 3 ou 4, **caractérisé en ce que** les entailles de guidage (33,34) de chacun des manchons (29) sont parallèles à la gorge (23) du coulisseau recevant le pion (17) de la bielle de commande (15).

6. Mécanisme selon l'une quelconque des revendications 1 à 5, **caractérisé en ce que** chaque ergot d'actionnement (31) supporte au moins un galet de roulement pour son guidage dans sa rainure du coulisseau (22).

7. Mécanisme selon l'une quelconque des revendications 1 à 6, **caractérisé en ce que** chaque câble (11) commandant un des balais (2,3) de l'essuie glace comporte, à l'opposé du boîtier de support (13), une crémaillère droite (39) dont les dents (40) engrènent avec un pignon cranté (41) tourillonnant dans un palier fixe (42) et dont l'axe (9) supporte le balai d'essuie glace entraîné par ce câble.

8. Mécanisme selon l'une quelconque des revendications 1 à 6, **caractérisé en ce que** chaque câble (11) a son extrémité sertie sur un doigt (45) porté par une roue (44) sur laquelle s'enroule ce câble, et dont l'axe (9) supporte le balai d'essuie glace entraîné par ce câble.
